Europäisches Patentamt

European Patent Office

Office européen des brevets

(11) Veröffentlichungsnummer: **0 398 385**
**A2**

(12) **EUROPÄISCHE PATENTANMELDUNG**

(21) Anmeldenummer: **90109620.6**

(22) Anmeldetag: **21.05.90**

(51) Int. Cl.⁵: **A01B 33/06**

(30) Priorität: **19.05.89 DE 3916268**

(43) Veröffentlichungstag der Anmeldung:
**22.11.90 Patentblatt 90/47**

(84) Benannte Vertragsstaaten:
**AT CH DE DK ES FR GB IT LI NL**

(71) Anmelder: **H. Niemeyer Söhne GmbH & Co. KG**
**Heinrich-Niemeyer-Strasse 52, Postfach 11 65**
**D-4446 Hörstel(DE)**

(72) Erfinder: **Barlage, Bruno**
**Beethovenstrasse 13**
**D-4446 Hörstel(DE)**
Erfinder: **Robert, Franz-Josef**
**Bornholtstrasse 7**
**D-4446 Hörstel(DE)**
Erfinder: **Gattermann, Bernd**
**Eichenwall 3**
**D-2872 Hude 1(DE)**

(54) **Zapfwellengetriebene Kreiselegge.**

(57) Zapfwellenangetriebene Kreiselegge mit einem sich quer zur Fahrtrichtung erstreckenden Kastenbalken, in dem mehrere, jeweils aus Werkzeugträger, Antriebsrad und Bodenbearbeitungswerkzeug bestehende Werkzeugkreisel mittels Lager drehbar nebeneinander angeordnet sind und einander benachbarte Werkzeugkreisel über ein Stirnradgetriebe im entgegengesetzten Drehsinn rotierend angetrieben werden. Um mit einfachsten konstruktiven Maßnahmen eine kostengünstige Bauweise für die Herstellung von Kreiseleggen zu schaffen, ist vorgesehen, daß die Stirnräder (14,15) auf die Werkzeugträger (7) aufgeschraubt sind, wobei das Gewinde zwischen Stirnrad (14,15) und Werkzeugträger (7) die Drehbewegung überträgt.

Fig.5

# Zapfwellengetriebene Kreiselegge

Die Erfindung betrifft eine zapfwellenangetriebene Kreiselegge mit einem sich quer zur Fahrtrichtung erstreckenden Kastenbalken, in dem mehrere Werkzeugkreisel mittels Lager drehbar nbeneinander angeordent sind und einander benachbarte Werkzeugkreisel über ein Stirnradgetriebe im entgegengesetzten Drehsinn rotierend angetrieben werden.

Derartige Kreiseleggen sind durch die DE-C-29 47 340 bekannt. Diese Kreiselegge weist einen Kastenbalken auf, in dem mehrere Werkzeugkreisel nebeneinander quer zur Fahrtrichtung auf je einer Welle angeordnet sind. Diese Welle wird von zwei in einem mit dem Kastenbalkenboden verbundenen Gehäuse angeordneten Lagern geführt, wobei jedem Gehäuse ein Verstärkungsteil zugeordnet ist, welches das Gehäuse umgibt, und daß mittels Befestigungsorganen mit dem Boden des Kastenbalkens befestigt ist. Auf dem aus dem Kastenbalkenboden herausragenden Teil der Welle ist der Werkzeugträger mittels einer Verzahnung befestigt. An diesem Werkzeugträger befinden sich jeweils zwei Bodenbearbeitungswerkzeuge. Dieser Werkzeugträger mit seinen Bodenbearbeitungswerkzeugen bildet den Werkzsugkreisel. Diese jeweilige Welle, an denen der Werkzeugkreisel befestigt ist, erstreckt sich nach oben bis in das innerste des Kastenbalkens und ist an ihrem oberen Ende mit einem Flansch versehen, auf dem ein Zahnrad mittig angeschraubt ist. Dieses Zahnrad ist als Stirnrad ausgebildet und dient zum Antrieb des zugehörigen Werkzeugkreisels. Die Zähne dieser nebeneinander angeordneten Zahnräder der Werkzeugkreisel greifen derart ineinander, daß die Wellen, an denen die Werkzeugkreisel befestigt sind, in Drehung versetzt werden. Die Drehbewegung wird einer der nebeneinander in einem Abstand zueinander angeordneten Wellen von der Zapfwelle des die Kreiselegge tranportierenden Traktors über ein Schaltgetriebe erzeugt.

Die konstruktive Gestaltung der Lagerung dieser Wellen in dem Kastenbalkenboden des sich quer zur Fahrtrichtung erstreckenden Kastenbalkens und die Befestigung der einzelnen Stirnräder an den jeweils mit einem Flansch versehenen Antriebswellen der Werkzeugkreisel ist sehr aufwendig und teuer. Die Montage der einzelnen miteinander zusammenwirkenden Bauteile für den Antrieb der einzelnen Werkzeugkreisel ist ebenfalls sehr aufwendig.

Der Erfindung liegt nun die Aufgabe zugrunde, mit einfachsten konstruktiven Maßnahmen eine kostengünstige Bauweise für die Herstellung von Kreiseleggen zu schaffen.

Diese Aufgabe wird in erfindungsgemäßer Weise dadurch gelöst, daß die Stirnräder auf die Werkzeugkreisel aufgeschraubt sind, wobei das Gewinde zwischen Stirnrad und Werkzeugkreisel die Drehbewegung überträgt. Infolge dieser Maßnahmen läßt sich ein kostengünstiges Stirnradgetriebe für den Antrieb der mittels Lager drehbar angeordneten Werkzeugkreisel schaffen, wobei einer einfachen Montage der Stirnräder, ja sogar der gesamten Antriebseinheit der einzelnen Werkzeugkreisel Sorge getragen wird. Eine derartige konstruktive Gestaltung der Verbindungsstelle zwischen dem Stirnrad und dem Werkzeugkreisel stellt eine sehr kostengünstige und robuste Konstruktion für den Antrieb der einzelnen Werkzeugkreisel dar.

Hierbei ist dann bei der Ausführungsform in erfindungsgemäßer Weise vorgesehen, daß der Werkzeugkreisel in seinem oberen Bereich ein Gewinde aufweist, daß das Stirnrad ebenfalls ein Gewinde aufweist, mit welchem es auf das Gewinde des Werkzeugkreisels aufgeschraubt wird.

Bei einer besonders bevorzugten Ausführungsform ist in erfindungsgemäßer Weise vorgesehen, daß der Werkzeugträger topfartig ausgebildet ist, daß an der Bodenseite oder im unteren zylindrischen Bereich des topfförmigen Werkzeugträgers die Zinken befestigt sind, daß an der Oberseite des topfförmigen Werkzeugträgers das Stirnrad des Stirnradgetriebes befestigt ist, und daß zwischen dem Stirnrad und der Zinkenbefestigung das einzige Lager angeordnet ist. Hierdurch ergibt sich eine einfache und vorteilhafte Ausbildung des Werkzeugträgers und der damit verbundenen vorteilhaften Integration des Lagers in dem Werkzeugträger bzw. dem Kastenbalkenboden, wobei eine sehr gute Kraftübertragung vom Stirnradgetriebe über die Werkzeugträger auf die Bodenbearbeitungszinken erreicht wird. Hierbei ist dann in erfindungsgemäßer Weise vorgesehen, daß auf der Außenseite, im oberen Bereich des topfförmigen Werkzeugträgers, ein umlaufendes Gewinde angeordnet ist, und daß das Stirnrad des Stirnradgetriebes jeweils ebenfalls ein Gewinde aufweist, welches dem auf dem topfförmig ausgebildeten Werkzeugträger aufgebrachten Gewinde entspricht, so daß das Stirnrad auf den topfförmigen Werkzeugträger aufschraubbar ist. Infolge dieser Maßnahmen wird eine besonders einfache Montage der Stirnräder auf den Werkzeugträgern erreicht.

Damit nun eine ordnungsgemäße Kraftübertragung vom Stirnradgetriebe auf den Werkzeugträger und somit den einzelnen Werkzeugkreiseln erfolgt, ist in erfindungsgemäßer Weise vorgesehen, daß das im oberen Bereich des topfförmigen Werkzeugträgers umlaufende Gewinde einen Außendurchmesser von mindestens 100 mm aufweist.

Damit nun ein ordnungsgemäßer Antrieb für die nebeneinander drehbar am sich quer zur Fahrtrichtung erstreckenden Kastenbalken gelagerten Werkzeugkrsisel, wobei einander benachbarte Werkzeugkreisel über ein Stirnradgetriebe im entgegengesetzten Drehsinn rotieren angetrieben werden, gewährleistet ist, ist erfindungsgemäß vorgesehen, daß die Werkzeugträger abwechselnd Rechts- und Linksgewinde aufweisen, und daß die Stirnräder entsprechend mit Rechts- und Linksgewinde versehen sind.

Da sich die Bearbeitungsbahnen der Bodenbearbeitungswerkzeuge benachbarter Werkzeugkreisel überlappen, ist es notwendig, daß die Bodenbearbeitungswerkzeuge benachbarter Werkzeugkreisel versetzt zueinander angeordnet sind. Hierbei ist es dann notwendig, daß die an den Werkzeugträgern angeordneten Bodenbearbeitungswerkzeuge gegenüber den Stirnrädern im eingebauten Zustand eine bestimmte Stellung zueinander einnehmen müssen. Aus diesem Grunde ist erfindungsgemäß vorgesehen, daß sowohl das Stirnrad wie der Werkzeugträger ein Gewinde mit definiertem Einlauf zur definierten Zinkenstellung aufweisen.

In einer besonders bevorzugten Ausführungsform des erfindungsgemäßen Gegenstandes ist vorgesehen, daß jeder Werkzeugkreisel nur mittels eines einzigen Lagers und/oder Lagerringes in dem Kastenbalken gelagert ist, welches(r) sich in einer einzigen Ebene befindet. Infolge dieser Maßnahme ergibt sich eine äußerst kostengünstige Lagerung für den Werkzeugkreisel, weil für jeden Werkzeugkreisel nur noch ein einziges Lager verwendet wird. In vorteilhafter Weise ist dieses einzige Lager an dem Kastenbalkenboden befestigt. Hierdurch ergeben sich zusätzlich vorteilhafte Montagemöglichkeiten.

Eine sehr kostengünstige Anordnung des Lagers für die Lagerung des Werkzeugkreisels in dem Kastenbalken ergibt sich dadurch daß das Lager unmittelbar an und/oder in dem Außenring des Werkzeugträgers angeordnet ist. Hierdurch wird die Voraussetzung dazu geschaffen, daß in kostengünstigster Weise das Lager unmittelbar in den Außenring des Werkzeugträgers integriert werden kann.

Damit in vorteilhafter Weise bei Verwendung des erfindungsgemäßen einzigen Lagers die Kräfte gut von dem Lager aufgenommen werden können, ist vorgesehen, daß das Lager einen größeren Durchmesser aufweist, der mindestens einem Drittel des Durchmessers des Zinkenarbeitsbereiches und/oder der Hälfte des Drehachsenabstandes der einander benachbarten Werkzeugkreisel entspricht, jedoch kleiner als dieser Achsabstand ist.

Damit sich nun eine besonders kostengünstige Herstellung der einzelnen Werkzeugträger ergibt, ist erfindungsgemäß vorgesehen, daß das Gewinde, mit dem das Stirnrad auf den Werkzeugträger aufgeschraubt ist, etwa den Durchmesser des Lagers aufweist.

Des weiteren ist in erfindungsgemäßer Weise vorgesehen, daß sich auf der Außenseite des topfförmigen Werkzeugträgers eine umlaufende Lagernut zur Aufnahme von Kugeln, des als Kugellager ausgebildeten Lagers befindet, und daß sich in dem Boden des Kastenbalkens ebenfalls für die Lagerung jedes Werkzeugkreisels eine ebenfalls umlaufende, als Rollbahn für die Walzkörper ausgebildete Rille zur Aufnahme von Kugeln des Kugellagers befindet. Infolge dieser Maßnahmen wird das einzige, entsprechend der Erfindung vorgesehene Lager, welches zur Lagerung des Werkzeugkreisels dient, unmittelbar in den Werkzeugträger und dem sich am Kastenbalkenboden befindlichen Lagerflansch integriert. Die Lagerrillen befinden sich einerseits unmittelbar in den topfförmigen Werkzeugträgern und andererseits in dem Boden des Kastenbalkens. Ein zusätzliches Lager, wie es üblicherweise sonst eingesetzt wurde, wird nicht mehr verwendet. Das Lager ist unmittelbar in den Werkzeugträger und in dem Kastenbalkenboden integriert.

Um eine einfache Montage zu ermöglichen, ist erfindungsgemäß vorgesehen, daß sich im Bereich der umlaufenden Rillen zumindest eine Aussparung befindet, durch welche die Kugeln für das einzige Lager einfüllbar sind, und daß diese Aussparung(en) durch einen oder mehrere einsetzbare Stopfen verschließbar ist (sind). Infolge dieser Maßnahmen können die für die Lagerung notwendigen Kugeln des erfindungsgemäßen Kugellagers durch diese Aussparungen eingefüllt werden. Durch das Einfüllen der Kugeln durch die Aussparung in die Lagerrille wir der Werkzeugkreisel bzw. der Werkzeugträger in den Kastenbalkbenboden montiert und von diesen Kugeln gehalten. Damit eine einwandfreie Funktion des Lagers gewährleistet ist, befindet sich die Aussparung zur Einfüllung der Kugeln jeweils in der uunbelasteten Zone der Rille. Eine vorteilhafte Anordung der Aussparung ergibt sich dadurch, daß diese sich in der Seitenwand des topfförmigen Werkzeugkreisels befindet. Es ist aber auch möglich, daß sich die Aussparung zur Einfüllung der Kugeln in das jeweilige Lager, in der feststehenden Seitenwand in der Kreiselwanne befindet. Anstelle des Stopfens zum Verschließen der Aussparung ist es auch möglich, eine sichere Anordnung der Kugeln im Lager dadurch zu gewährleisten, daß die Aussparung einen geringfügig kleineren Durchmesser als die Kugeln aufweist. Die Kugeln müssen dann durch diese Aussparung in die Lagerrille gepreßt werden.

Der Lageraußenring läßt sich erfindungsgemäß beispielsweise an den Kastenbalken anschrauben, oder der Lageraußenring ist unlösbar (durch Schweißen oder Bördeln) mit dem Kastenbalken verbunden.

Um eine einfache Montage der Werkzeugträger mit ihren dazugehörigen Bauteilen zu erreichen ist in erfindungsgemäßer Weise vorgesehen, daß der Werkzeugträger und der Lageraußenring als fertiges Lager vormontiert werden und als Montageeinheit an den Kastenbalkenboden befestigt oder angeflanscht werden. Diese vormontierten Montageeinheiten lassen sich dann einfach mittels Schrauben oder anderer Befestigungsmittel an den Kastenbalkenboden anflanschen.

In einer anderen Ausführungsform ist erfindungsgemäß vorgesehen, daß der Lageraußenring, der Werkzeugträger mit den Zinken und das auf dem Werkzeugträger angeordnete Stirnrad eine Montageeinheit bilden die bereits vormontiert ist und als komplette Montageeinheit in den Kastenbalken eingeführt und an den Kastenbalkenboden und insbesondere mittels Schrauben befestigt oder angeflanscht wird. Hierbei ist dann weiterhin vorgesehen, daß im Kastenbalkenboden Öffnungen vorgesehen sind, durch welche die jeweils vormontierte Montageeinheit von Werkzeugträger, Lageraußenring und Stirnrad eingeführt wird, und daß diese Öffnungen so bemessen sind, daß die Montageeinheiten von unten in den Kastenbalkenboden hineinschiebend montierbar sind. Hierdurch ergibt sich eine besonders einfache Montagemöglichkeit, so daß sich eine kostengünstige Bauweise für eine Kreiselegge schaffen läßt.

In einer besonders vorteilhaften und einfachen Ausführungsform ist in erfindungsgemäßer Weise vorgesehen, daß sich auf der Außenseite des topfförmigen Werkzeugträgers eine umlaufende als Rollbahn für die Wälzkörper ausgebildete Lagerrille zur Aufnahme von Kugeln des als Kugellager ausgebildeten Lagers befindet, daß der Lagerinnenring in dem Werkzeug träger integriert ist, und daß der Lageraußenring aus zwei in horizontaler Ebene teilbaren Hälften besteht. Infolge dieser Maßnahmen läßt sich auf einfachste Weise eine Lagerung für die im Kastenbalkenboden drehbar gelagerten Werkzeugkrsisel herstellen, wobei die Montage des Lagers auch den teilbaren Lageraußenring sehr unkompliziert ist.

Zur Verhinderung des Einklemmens von Steinen zwischen den nebeneinander angeordneten Werkzeugkreiseln jeweils im unteren Bereich des jeweiligen Werkzeugträgers ist erfindungsgemäß vorgesehen, daß der Werkzeugtrager in seinem unteren Bereich einen kreisrunden, tellerförmigen Abschluß aufweist.

Weitere Einzelheiten der Erfindungen sind den übrigen Unteransprüchen, der Beispielsbeschreibung und den Zeichnungen zu entnehmen. Hierbei zeigt:

Fig. 1 - Eine erfindungsgemäß ausgebildete Kreiselegge in der Ansicht von vorne in Prinzipdarstellung.

Fig. 2 - Die Kreiselegge gemäß Fig. 1 in der Draufsicht, jedoch mit hinter dem Werkzeugkreisel angeordneter, höhenverstellbarer Nachlaufwalze zur Einstellung der Arbeitstiefe der Bodenbearbeitungswerkzeuge der Kreiselegge.

Fig. 3 - Die erfindungsgemäße Anordnung der Werkzeugkreisel in dem Kastenbalkenboden, ausschnittsweise im Längsschnitt in der Ansicht III-III und in vergrößerter Darstellung.

Fig. 4 - Die Draufsicht auf den Kastenbalkenboden im Ausschnitt und in vergrößerter Darstellung.

Fig. 5 - Die vergrößerte Darstellung der Anordnung eines Werkzeugkreisels im Kastenbalken gemäß der Darstellung in Fig. 3.

Fig. 6 - Eine andere Befestigung der Zinken an den Werkzeugträgern gemäß Fig. 3 in gleicher Darstellungsweise wie in Fig. 3.

Fig. 7 - Eine andere erfindungsgemäße Ausbildung der Lagerung der Werkzeugträger im Kastenbalkenboden.

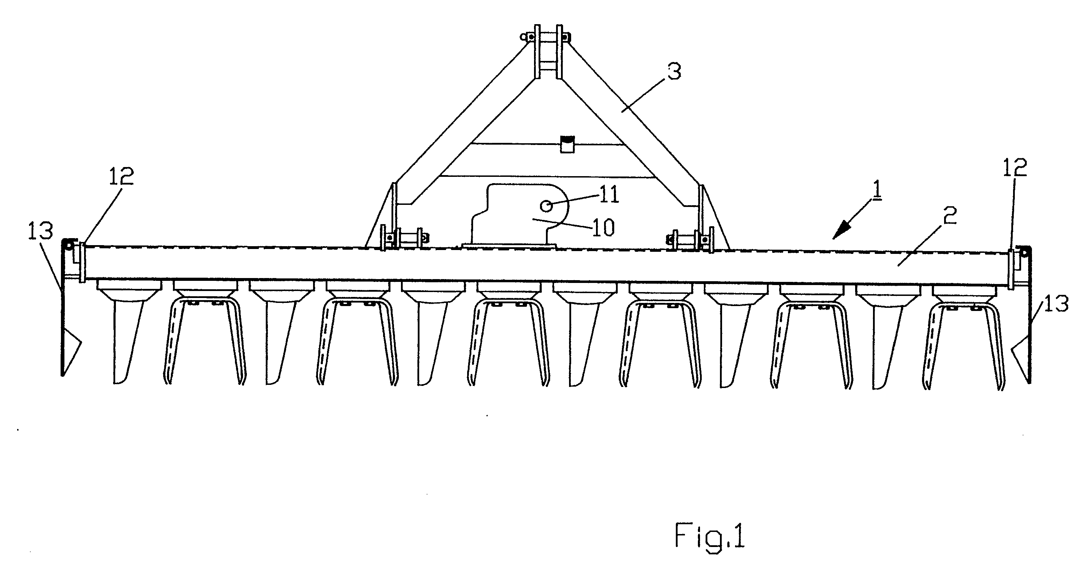

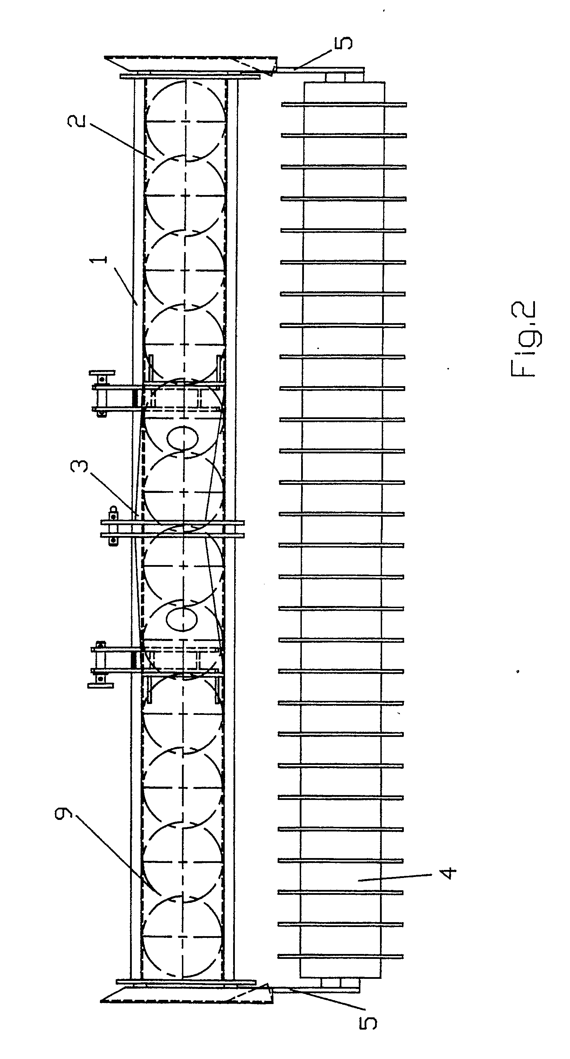

Die Kreiselegge (1) gemäß den Fig. 1 und 2 weist den Kastenbalken (2) auf. Auf der Oberseite des Kastenbalkens (2) ist der Dreipunktanbaubock (3) für den Anschluß der Kreiselegge (1) an den Dreipunktkraftheber eines Traktors angeordnet. Hinter der Kreiselegge (1) befindet sich die Nachlaufwalze (4). Dies Nachlaufwalze (4) weist an ihren beiden äußeren Enden die Tragarme (5) auf, mit welchen sie an den Stirnseiten des Kastenbalkens (2) der Kreiselegge (1) angelenkt ist. Über bekannte und daher nicht näher dargestellten Mitteln ist die Nachlaufwalze (4) gegenüber der Kreiselegge (1) in der Höhe verstellbar und gegenüber dem Kastenbalken (2) einstellbar.

In dem Kastenbalken (3) sind die Werkzeugkreisel (6) gelagert, wie später noch näher erläutert wird. Die Werkzeugkreisel (6) bestehen jeweils aus dem topfförmigen Werkzeugträger (7), den als Bodenbearbeitungswerkzeuge ausgebildeten Zinken (8) und einem jeweils auf dem Werkzeugträger (7) befestigten Stirnrad. Einander benachbarte Werkzeugkreisel (6) werden in entgegengesetztem Drehsinn rotierend durch das sich im Kastenbalken (2) befindlichen Stirnradgetriebe (9) angetrieben. Dieses Stirnradgetriebe (9) steht mit dem am Kastenbalken (2) befestigten Zentralgetriebe (10) in Antriebsverbindung. An die Anschlußwelle (11) des Zentralgetriebes (10) wird eine Gelenkwelle angeschlossen, die mit der Zapfwelle des die Kreiselegge (1) ziehenden Traktors verbunden wird. So sind also die Werkzeugkreisel (6) und die daran befindlichen Zinken (8) über die Zapfwelle eines die Kreiselegge (1) ziehenden Traktors antreibbar. Durch die Zinken (8), welche rotierend den Boden bearbeiten, kann eine Saatbett- oder eine Grundbodenbearbeitung durchgeführt werden. An den seitlichen Enden (12) des Kastenbalkens (2) befinden sich die Seitenschilde (13), die eine seitliche Verlagerung der Erde außerhalb des Arbeitsbereiches der Kreiselegge (1) verhindern.

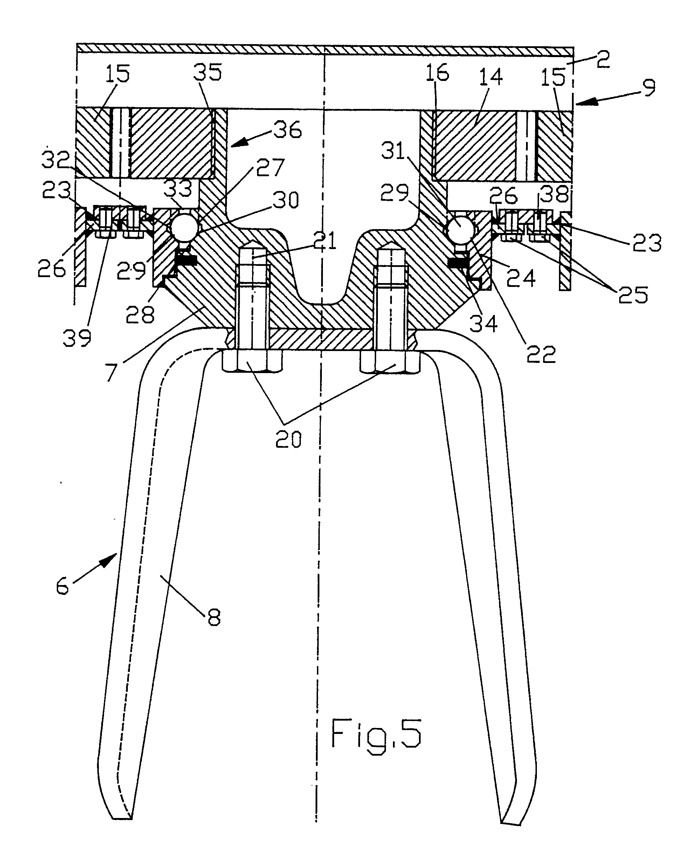

In dem Kastenbalken (2) befindet sich das Stirnradgetriebe (9), wie die Fig. 2 bis 5 zeigen, welches aus den auf den Werkzeugträgern (7) befestigten Stirnrädern (14,15) besteht. Die Stirnräder (14,18) sind auf den Werkzeugträgern (7) mittels der Gewinde (16,17) aufgeschraubt. Der Werkzeugkreisel (6) dreht sich in der Draufsicht gesehen in Pfeilrichtung (18), während der Werkzeugkrsisel (6') sich in Pfeilrichtung (19) dreht. D.h., daß die einander benachbarten Werkzeugkreisel (6,6') im entgegengesetzten Drehsinn zueinander rotieren. Um überhaupt einen entgegengesetzten Drehsinn der Werkzeugkreisel (6,6') zu erreichen, d.h. einen ordnungsgemäßen Antrieb der Werkzeugkreisel (6,6') zu gewährleisten, ist das Gewinde (16) als Linksgewinde ausgebildet, während das Gewinde (17) des Werkzeugkreisels (6') als Rechtsgewinde ausgebildet ist. Somit schrauben sich die Stirnräder (14,15) automatisch beim Antrieb der Werkzeugkreisel (6,6') fest. An den Werkzeugkreiseln (6,6') sind die als Doppelzinken ausgebildeten Zinken (8,8') mittels der Schrauben (20) befestigt. Hierzu befinden sich in den Werkzeugträgern (7) die als Sacklöcher (21) ausgebildeten Befestigungselemente, in welchen die Schrauben (20) zur Befestigung der Zinken (8,8'), an den Werkzeugträgern (7) angeschraubt werden.

Die Werkzeugträger (7) sind topfförmig ausgebildet und nur mittels eines einzigen Lagers (22) in dem Kastenbalken (2) gelagert. Dieses Lager (22) befindet sich in einer einzigen Ebene. Das einzige Lager (22) ist hierbei an dem Kastenbalkenboden (23) des Kastenbalkens (2) befestigt, d.h., der Lageraußenring (24) ist mittels der Schrauben (25) an dem Kastenbalkenboden (23) mit Hilfe der an dem Lageraußenring (24) angeschweißten Anschweißenden (26) angeschraubt. Der Lagerinnenring (27) befindet sich auf der Außenseite (28) des topfförmigen Werkzeugträgers (7) des Werkzeugkreisels (6 bzw. 6) und ist somit im Werkzeugträger (7) integriert. Er wird von der um den Werkzeugträger (7) umlaufenden, als Rille (29) ausgebildeten Rollbahn (30) für die als Kugeln (31) ausgebildeten Walzkörper gebildet. Der Lageraußenring (24) weist die Rollbahn (32) für die Wälzkörper (31) auf. Das Lager (22) ist als Vierpunktlager ausgebildet, wobei die Rollbahnen (30,32) aus zwei zusammenlaufenden Kreisbögen bestehen, so daß die Kugeln (31) diese an vier Punkten berühren. Das Lager (22) ist derart ausgebildet, daß sich im Bereich der Rollbahnen (30,32) zwischen dem Lagerinnenring (27) und dem Lageraußenring (24) eine Aussparung (33) befindet, durch welche die Kugeln (31) für das einzige Lager (22) eingefüllt werden. Diese Aussparung (33) ist zur sicheren Anordnung der Kugeln (31) im Lager (22) so ausgebildet, daß die Aussparung (33) einen geringfügig kleineren Durchmesser als die Kugeln (31) aufweist, wobei die Kugeln (31) dann durch diese Aussparung (33) in die Rollbahnen (30,32) des Lagers (22) gepreßt werden. Es ist aber auch möglich, diese Aussparung (33) so auszubilden, daß die Öffnung der Aussparung (33), durch welche die Kugeln (31) eingefüllt werden, mittels eines Stopfens zur sicheren Anordnung der Kugeln (31) im Lager (22) verschlossen wird. Die Aussparung (33) zur Einfüllung der Kugeln (31) in das Lager (22) befindet sich jeweils in der unbelasteten Zone der Rollbahnen (30,32) des Lagers (22), so daß eine einwandfreie Funktion des Lagers gewährleistet ist. Um den Austritt von sich im Kastenbalken (2) befindlichen Schmiermitteln zu verhindern und gleichzeitig eine Abdichtung gegen von außen eindringenden Schmutz etc. sicherzu stellen, ist an jedem Lager (22) der einzelnen Werkzeugträger (7) die umlaufende Dichtung (34) vorgesehen. Die Lauffläche für diese Dichtung (34) ist im Lageraußenring (24) integriert.

Die Befestigung der als Doppelzinken (8 bzw.8') ausgebildeten Bodenbearbeitungswerkzeuge erfolgt mittels der Schrauben (20) an dem topfförmig ausgebildeten, auf der Außenseite (35) im oberen Bereich (36) ein umlaufendes Gewinde (16 bzw. 17) aufweisenden Werkzeugträger (7). Die Zinken (8 bzw. 8') sind an ihrer oberen Berührungsfläche (37) mit dem Werkzeugträger (7) ballig ausgebildet.

Die Montage der Werkzeugkreisel (6 bzw. 6') in dem Kastenbalken (2) erfolgt in der Weise, daß der Lageraußenring (24), der Werkzeugträger (7) mit den Zinken (8 bzw. 8') und das auf dem Werkzeugträger (7) angeordnete Stirnrad (14 bzw. 15) eine Montageeinheit bilden, die von unten durch sich im Kastenbalkenboden (23) befindliche Öffnungen in den Kastenbalken (2) eingesetzt werden. Die Montage dieser aus den einzelnen Bauteilen bestehenden Montageeinheit erfolgt in der Weise, daß zunächst die Dichtung (34) in den Werkzeugträger (7) eingesetzt wird, bevor dann der Lageraußenring (24) von oben über den topfförmigen Werkzeugträger (7) bis in seine entsprechende Position gestülpt wird. Nun werden die Kugeln (31) durch die Aussparung (33) in die von den Rollbahnen (30,32) gebildete Rille (29) eingefüllt und es entsteht das funktionsfähige Kugellager (22). Damit dieses einzige Lager (22) auch die auf das Lager (22) wirkenden Kräfte gut aufnehmen kann, weist dieses Lager (22) einen großen Durchmesser auf. Nun wird das Stirnrad (14 bzw. 15) in der Weise, wie beispielsweise eine Mutter auf einen Schraubbolzen aufgeschraubt wird, auf den topfförmigen Werkzeugträger (7) aufgeschraubt. Da der Antrieb benachbarter Werkzeugkreisel (6,6') im entgegengesetzten Drehsinn erfolgt, sind die nebeneinander angeordneten Werkzeugträger (7) abwechselnd mit Rechts- und Linksgewinde (16 bzw. 17) ausgerüstet. Hierdurch wird erreicht, daß sich die Stirnräder (14 bzw. 15) beim Antrieb der Werkzeugkreisel (6 bzw. 6') automatisch festschrauben. Zur einfachen Montage dieser Stirnräder (14 bzw. 15) auf den jeweiligen Werkzeugträgern (7), wobei die einzelnen, nebeneinander angeordneten, an den Werkzeugträgern (7) befestigten Zinken (8 bzw. 8') eine genau definierte Zinkenstellung zueinander aufweisen müssen, um eine ordnungsgemäße Bodenbearbeitung zu gewährleisten, weist sowohl das jeweilige Stirnrad (14 bzw. 15) als auch der entsprechende Werkzeugträger (29) ein Gewinde (16 bzw. 17) mit genau definiertem Einlauf auf, so daß sich die nebeneinander angeordneten Werkzeugkreisel (6,6') derart montieren lassen, daß die Zinken (8 bzw. 8') eine genau definierte Stellung zueinander einnehmen.

Diese vormontierte, aus den einzelnen Bauteilen bestehende Montageeinheit wird nun von unten in den Kastenbalken (2) mit der entsprechenden Zinkenstellung der Zinken (8,8') benachbarter Werkzeugkreisel (6,6') eingesetzt. Um nun einen sicheren und genauen Antrieb der Werkzeugträger (7) zu gewährleisten, wird diese Montageeinheit nun durch die an den Anschweißenden (26) des Lageraußenringes (24) sich befindlichen Zentrierungselementen (38), welche mit an dem Kastenbalkenboden (23) angeordneten Gegenzentrierungselementen (39) zusammenwirken, einjustiert und mittels der Schrauben (25) im Kastenbalkenboden (23) des Kastenbalkens (2) befestigt. Da es auch ebenfalls notwendig ist, daß die miteinander in Wirkverbindung stehenden Stirnräder (14 bzw. 15) eine genau definierte Stellung zueinander einnehmen müssen, sind auf den Stirnrädern (14 bzw. 15) entsprechende Markierungen vorgesehen.

Dadurch, daß das einzige Lager (22) in dem Werkzeugträger (7) und in dem am Kastenbalkenboden (23) angeschraubten Lageraußenring (24) und somit am Kastenbalkenboden (23) unmittelbar integriert ist, wird eine besonders einfach Lagerung der einzelnen, nebeneinander angeordneten Werkzeugkreisel (6 bzw. 6') einer Kreiselegge geschaffen.

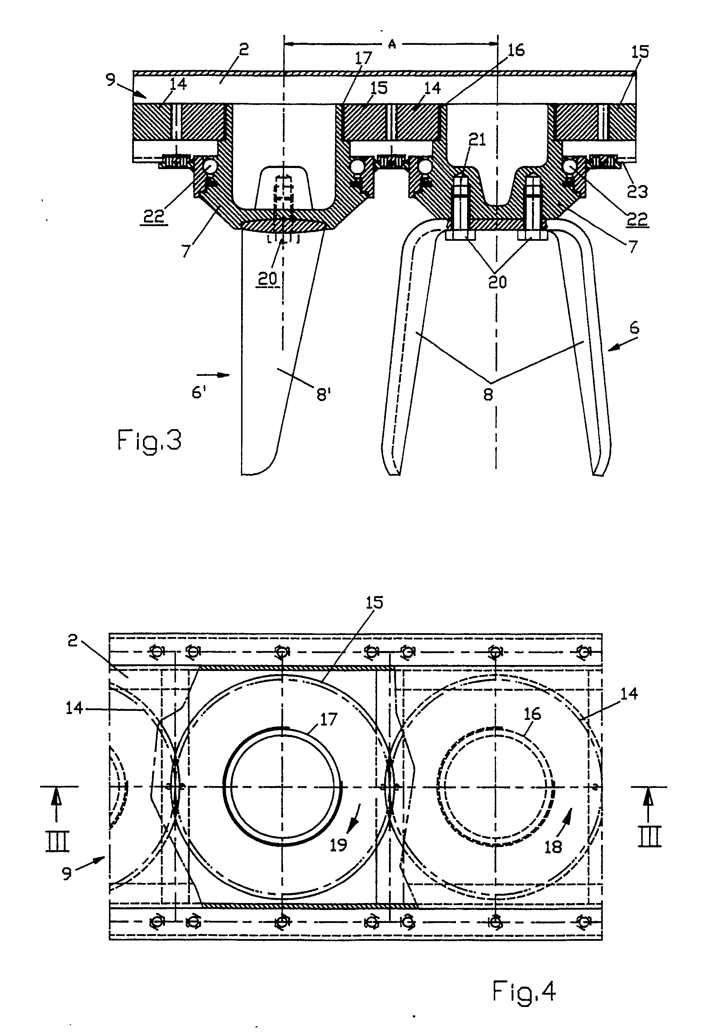

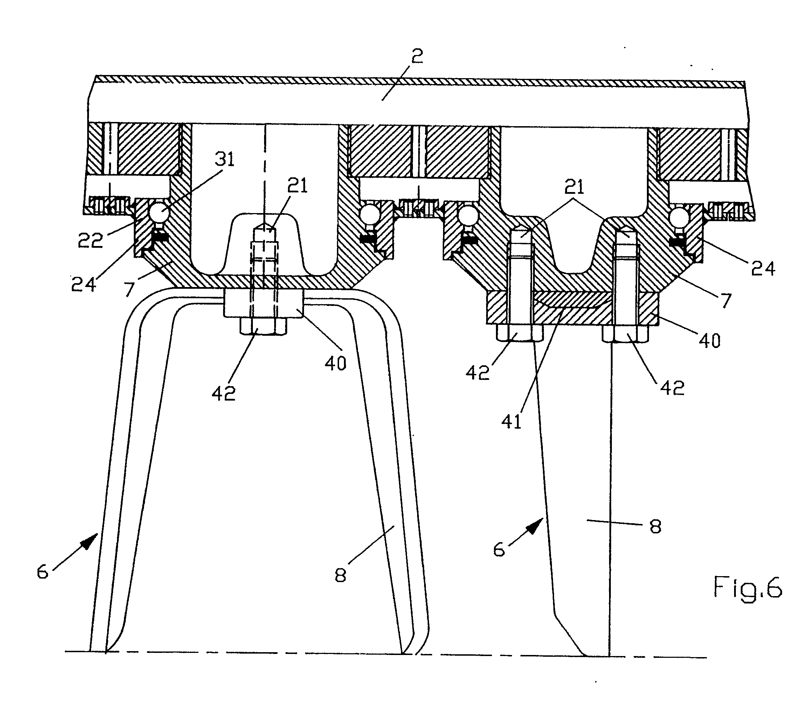

Die Fig. 6 unterscheidet sich nur durch die Anordnung der an dem Werkzeugträger (7) mittels des Klemmstückes (40) befestigten Doppelzinken (8 bzw. 8') von den Werkzeugkreiseln (6,6') gemäß der Fig. 3 bis 5. Dieses Klemmstück (40) weist die Aussparung (41) auf, die der Form des Doppelzinkens (8 bzw. 8') in diesem Bereich entspricht. Über die beiden Schrauben (42) ist dieses Klemmstück (40) an dem Werkzeugträger (7) angeschraubt.

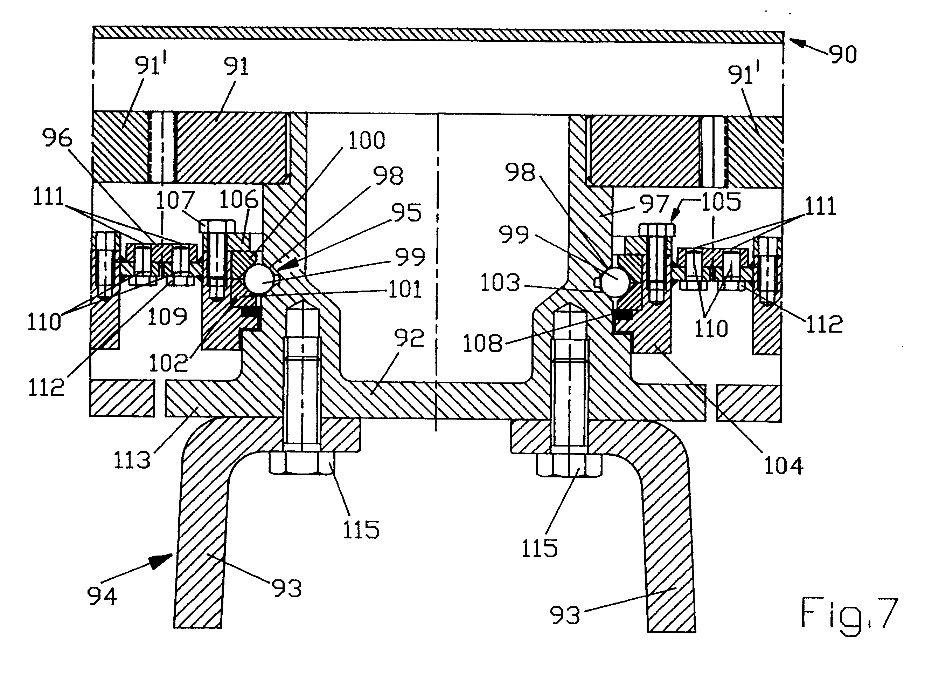

Die Fig. 7 zeigt die Schnittdarstellung des Kastenbalkens (90), in dem die Stirnräder (91,91') nebeneinander auf den topfförmig ausgebildeten Werkzeugträgern (92) aufgeschraubt sind. Das Stirnrad (91), der Werkzeugträger (92) und die als Bodenbearbeitungswerkzeuge ausgebildeten Zinken (93) bilden den jeweiligen Werkzeugkreisel (94). Diese Werkzeugkreisel (94) sind mittels des einzigen, als Vierpunktlager ausgebildeten Lagers (95) in dem Kastenbalkenboden (96) des Kastenbalkens (90) drehbar gelagert. Auf der Außenseite (97) des topfförmigen Werkzeugträgers (92) ist die umlaufende, als Rollbahn (98) für die als Kugel (99) ausgebildeten Wälzkörper ausgebildete Lagerrille zur Aufnahme der Kugeln (99) des als Kugellager ausgebildeten Lagers (95) integriert. Die beiden, in horizontaler Ebene teilbaren Lagerringhälften (100,101) bilden den Lageraußenring (102), wobei der Lagerinnenring (103) des Lagers (95) in der Außenseite (97) des topfförmigen Werkzeugträgers (92) integriert ist. Die beiden teilbaren, den Lageraußenring (102) bildenden Lagerringhälften (100,101) stützen sich in dem Lagerflansch (104) ab. Eine axiale Sicherung des Lageraußenringes (102) erfolgt mittels des als Klemmverbindung (105) dienenden Ringes (106), der mit Hilfe der Schrauben (107) an dem Lagerflansch (104) befestigt ist. Die in dem Lagerflansch (104) eingesetzte Dichtung (108) übernimmt die Abdichtung des Kastenbalkens (90) nach unten und verhindert ein Austreten von sich in dem Inneren des Kastenbalkens (90) befindlichen Schmiermitteln sowie das Eintreten von Staub- und Schmutzteilchen in den Kastenbalken (90).

Der Lagerflansch (104) weist jeweils die Anschweißenden (109) auf, mit denen er in dem Kastenbalkenboden (96) befestigt wird. Damit nun eine ordnungsgemäße Befestigung der Lagerflansche (104) in dem Kastenbalkenboden (96) erfolgen kann, weisen die Anschweißenden (109) die Zentrierungselemente (110) auf. Diese Zentrierungselemente (110) wirken mit den sich in dem Kastenbalkenboden (96) befindlichen, als Bohrungen ausgebildeten Gegenzentrierungselementen (111) zusammen. Mit den Schrauben (112) werden die Lagerflansche (104) an dem Kastenbalkenboden (96) verschraubt.

Zur Vermeidung des Einklemmens von Steinen zwischen den einzelnen, nebeneinander angeordneten Werkzeugträgern (92) weisen diese in ihrem unteren Bereich den kreisrunden, tellerförmigen Abschluß (113) auf. In die Sacklöcher (114) des Werkzeugträgers (92) werden die Schrauben (115) zur Befestigung der Zinken (93) angeschraubt. Die Zinken (93) sind jeweils mittels zweier Schrauben (115) an dem Werkzeugträger (92) befestigt.

Die Montage der Werkzeugkreisel (94) in dem Kastenbalken (90) wird folgendermaßen durchgeführt:

Zunächst wird die Dichtung (108) in den Lagerflansch (104) eingesetzt, bevor dann die untere Lagerringhälfte (101) des Lageraußenringes (102) in dem Lagerflansch (104) montiert wird. Als nächstes wird der Lagerflansch (104) von oben über den topfförmigen Werkzeugträger (92) gestülpt und die Kugeln (99) in die Rollbahn (98) eingefüllt. Die endgültige Montage des Lagers (95) erfolgt durch das Aufsetzen und Verschrauben des als Klemmverbindung (105) dienenden Ringes (106). Hiernach wird das Stirnrad (91) auf den Werkzeugträger (92) aufgeschraubt und die Zinken (93) werden entweder jetzt oder nach der Montage des Werkzeugträgers (93) in dem Kastenbalkenboden (96) mittels der Schrauben (115) an dem Werkzeugträger (92) befestigt. Die Montage der vormontierten Baueinheit erfolgt nun von unten durch eine entsprechende Öffnung in dem Kastenbalkenboden (96). Nachdem die Zentrierungselemente (110) ordnungsgemäß mit den Gegenzentrierungselementen (111) zusammenwirken, erfolgt die Verschraubung an dem Kastenbalkenboden (96) mittels der Schrauben (112).

**Ansprüche**

1. Zapfwellenangetriebene Kreiselegge mit einem sich quer zur Fahrtrichtung erstreckenden Kastenbalken, in dem mehrere, jeweils aus Werkzeugträger, Antriebsrad und Bodenbearbeitungswerkzeug bestehende Werkzeugkreisel mittels Lager drehbar nebeneinander angeordnet sind und einander benachbarte Werkzeugkreisel über ein Stirnradgetriebe im entgegengesetzten Drehsinn rotierend angetrieben werden, dadurch gekennzeichnet, daß die Stirnräder (14,15,91) auf die Werkzeugträger (7,92) aufgeschraubt sind, wobei das Gewinde (16,17) zwischen Stirnrad (14,15,91) und Werkzeugträger (7,92) die Drehbewegung überträgt.

2. Kreiselegge nach Anspruch 1, dadurch gekennzeichnet, daß der Werkzeugträger (7,92) in seinen oberen Bereich (36) ein Gewinde (16,17) aufweist, und daß das Stirnrad (14,15,91) ebenfalls ein Gewinde aufweist, mit welchem es auf das Gewinde (16,17) des Werkzeugträgers (7,92) aufgeschraubt ist.

3. Kreiselegge nach einem oder mehreren der vorstehenden Ansprüche, dadurch gekennzeichnet, daß der Werkzeugträger (7,92) topfförmig ausgebildet ist, daß an der Bodenseite oder im unteren zylindrischen Bereich des topfförmigen Werkzeugträgers (7,92) die Zinken (8,8',93) befestigt sind, daß an der Oberseite (36) des topfförmigen Werkzeugträgers (7,92) das Stirnrad (14,15,91) des Stirnradgetriebes (9) befestigt ist, und daß zwischen dem Stirnrad (14,15,91) und der Zinkenbefestigung (20,115) das einzige Lager angeordnet ist.

4. Kreiselegge nach einem oder mehreren der vorstehenden Ansprüche, dadurch gekennzeichnet, daß auf der Außenseite (35), im oberen Bereich (36) des topfförmigen Werkzeugträgers (7,92), ein umlaufendes Gewinde (16,17) angeordnet ist, daß das Stirnrad (14,15,91) des Stirnradgetriebes (9) jeweils ebenfalls ein Gewinde (16,17) aufweist, welches dem auf dem topfförmig ausgebildeten Werkzeugträger (7,92) aufgebrachten Gewinde (16,17) entspricht, so daß das Stirnrad (14,15,91) auf den topfförmigen Werkzeugträger (7,92) aufschraubbar ist.

5. Kreiselegge nach einem oder mehreren der vorstehenden Ansprüche, dadurch gekennzeichnet, daß das Gewinde (16,17) einen Außendurchmesser von mindestens 100 mm aufweist.

6. Kreiselegge nach einem oder mehreren der vorstehenden Ansprüche, dadurch gekennzeichnet, daß die Werkzeugträger (7,92) abwechselnd Rechts- und Linksgewinde (16,17) aufweisen, und daß Stirnräder (14,15,91) entsprechend mit Rechts- und Linksgewinde (16,17) vorgesehen sind.

7. Kreiselegge nach einem oder mehreren der vorstehenden Ansprüche, dadurch gekennzeichnet, daß sowohl das Stirnrad (14,15,91) wie der Werkzeugträger (7,92) ein Gewinde (16,17) mit definiertem Einlauf zur definierten Zinkenstellung aufweisen.

8. Kreiselegge nach einem oder mehreren der vorstehenden Ansprüche, dadurch gekennzeichnet, daß jeder Werkzeugkreisel (7,92) nur mittels eines einzigen Lagers (22,95) und/oder Lagerringes (24) in dem Kastenbalken (2,90) gelagert ist, welches(r) sich in einer einzigen Ebene befindet.

9. Kreiselegge nach Anspruch 1, dadurch gekennzeichnet, daß das Lager (22,95) unmittelbar an und/oder in dem Außenring (28,97) des Werkzeugträgers (7,92) angeordnet ist.

10. Kreiselegge nach einem oder mehreren der vorstehenden Ansprüche, dadurch gekennzeichnet, daß das Lager (22, 95) einen großen Durchmesser aufweist, der mindestens einem Drittel des Durchmessers des Zinkenarbeitbereiches und/oder der Hälfte des Drehachsenabstandes (A) der einander benachbarten Werkzeugkreisel (6,6',94) entspricht, jedoch kleiner als dieser Achsabstand (A) ist.

11. Kreiselegge nach einem oder mehreren der vorstehenden Ansprüche, dadurch gekennzeichnet, daß das Gewinde (16,17), mit dem das Stirnrad (14,15,91) auf den Werkzeugträger (7,92) aufgeschraubt ist, etwa den Durchmesser des Lagers (22,95) aufweist.

12. Kreiselegge nach einem oder mehreren der vorstehenden Ansprüche, dadurch gekennzeichnet, daß sich auf der Außenseite (28,97) des topfförmigen Werkzeugträgers (7,92) eine umlaufende, als Rollbahn (30,98) für die Wälzkörper (31,99) ausgebildete Lagerrille (29) zur Aufnahme von Kugeln (31,99) des als Kugellager ausgebildeten Lagers (22,95) befindet, und daß sich in dem Boden (23,96) des Kastenbalkens (2,90) ebenfalls für die Lagerung jedes Werkzeugkreisels (6,6´,94) eine ebenfalls umlaufende Rille (29) zur Aufnahme der Kugeln (31,99) des Kugellagers (22,95) befindet.

13. Kreiselegge nach einem oder mehreren der vorstehenden Ansprüche, dadurch gekennzeichnet, daß sich im Bereich der umlaufenden Rille (29) zumindest eine Aussparung (33) befindet, durch welche die Kugeln (31) für das einzige Lager (22) einfüllbar sind, und daß diese Aussparung(en) (33) durch einen oder mehrere einsetzbare Stopfen verschließbar ist (sind).

14. Kreiselegge nach einem oder mehreren der vorstehenden Ansprüche, dadurch gekennzeichnet, daß die Aussparungen (33) zur Einfüllung der Kugeln (31) sich jeweils in der unbelasteten Zone der Rille (29) befindet.

15. Kreiselegge nach einem oder mehreren der vorstehenden Ansprüche, dadurch gekennzeichnet, daß die Aussparungen (33) zur Einfüllung der Kugeln (31) sich in der Seitenwand des topfförmigen Werkzeugträgers (7) befindet.

16. Kreiselegge nach einem oder mehreren der vorstehenden Ansprüche, dadurch gekennzeichnet, daß der Lageraußenring (24,102) an den Kastenbalken (2,90) angeschraubt wird.

17. Kreiselegge nach einem oder mehreren der vorstehenden Ansprüche, dadurch gekennzeichnet, daß der Lageraußenring (24,102) unlösbar (durch Schweißen oder Bördeln) mit dem Kastenbalken (2,90) verbunden ist.

18. Kreiselegge nach einem oder mehreren der vorstehenden Ansprüche, dadurch gekennzeichnet, daß der Werkzeugträger (7,92) und der Lageraußenring (24, 102) als fertiges Lager (22,95) vormontiert werden und als Montageeinheit an den Kastenbalkenboden (23,96) befestigt oder angeflanscht werden.

19. Kreiselegge nach einem oder mehreren der vorstehenden Ansprüche, dadurch gekennzeichnet, daß der Lageraußenring (24,102) der Werkzeugträger (7,92) mit Zinken (8,8´,93) und das auf dem Werkzeugträger (7,92) angeordnete Stirnrad (14,15 91) eine Montageeinheit bilden die bereits vormontiert ist und als komplette Montageeinheit in den Kastenbalken (2, 90) eingeführt und an den Kastenbalkenboden (23,96) befestigt, insbesondere mittels Schrauben (25,112) angeflanscht wird.

20. Kreiselegge nach einem oder mehreren der vorstehenden Ansprüche, dadurch gekennzeichnet, daß im Kastenbalkenboden (23,96) Öffnungen vorgesehen sind, durch welche die vormontierten Montageeinheiten von Werkzeugträgern (7,92), Lageraußenring (24,102) und Stirnrad (14,15,91) eingeführt werden, und daß diese Öffnungen so bemessen sind, da die Montageeinheiten von unten in den Kastenbalkenboden (23,96) hineinschiebend montierbar sind.

21. Kreiselegge nach einem oder mehreren der vorstehenden Ansprüche, dadurch gekennzeichnet, daß auf der Außenseite (97) des topfförmigen Werkzeugträgers (92) eine umlaufende, als Rollbahn (98) für die Wälzkörper (99) ausgebildete Lagerrille zur Aufnahme von Kugeln (99) des als Kugellager ausgebildeten Lagers (95) integriert ist, und daß der Lageraußenring (102) aus zwei in horizontaler Ebene teilbaren Lagerringhälften (100,101) besteht.

22. Kreiselegge nach einem oder mehreren der vorstehenden Ansprüche, dadurch gekennzeichnet, da zumindest eine Hälfte (100) des Lageraußenringes (102) abnehmbar ausgebildet ist.

23. Kreiselegge nach einem oder mehreren der vorstehenden Ansprüche, dadurch gekennzeichnet, daß die eine Hälfte (101) des Lageraußenringes (102) in dem am Kastenbalkenboden (96) zu befestigen den Lagerflansch (104) integriert ist.

24. Kreiselegge nach einem oder mehreren der vorstehenden Ansprüche, dadurch gekennzeichnet, daß die abnehmbar ausgebildete Hälfte (100) des Lageraußenringes (102) in axialer Richtung mittels eines als Klemmverbindung (105) dienenden Ringes (106) gesichert und eingestellt wird.

25. Kreiselegge nach einem oder mehreren der vorstehenden Ansprüche, dadurch gekennzeichnet, daß der Werkzeugträger (92) in seinem unteren Bereich einen kreisrunden, tellerförmigen Abschluß (113) aufweist, an welchen vorzugsweise die Zinken (93) befestigt sind.

26. Kreiselegge nach einem oder mehreren der vorstehenden Ansprüche, dadurch gekennzeichnet, daß an dem Werkzeugträger (92) zwei abgewinkelte, als Bodenbearbeitungswerkzeug ausgebildete Zinken (93) angeschraubt sind.

Fig.1

EP 0 398 385 A2

Fig. 2

EP 0 398 385 A2

Fig.3

Fig.4

Fig.5

Fig.6

EP 0 398 385 A2

Fig.7

EP 0 398 385 A2